# FASCICULE DE BREVET EUROPEEN

(11) **EP 2 596 903 B1**
(45) Date de publication et mention de la délivrance du brevet: **09.05.2018**
(21) Numéro de dépôt: 12194693.3
(22) Date de dépôt: 28.11.2012
(51) Int. Cl.: B29L 31/30, B29C 65/56, B29C 65/00, B62D 65/02, F16B 17/00, B23P 11/00, F16B 5/07

(54) **PROCEDE DE CONNECTION D'UN ENSEMBLE COMPRENANT AU MOINS TROIS PIECES ET ENSEMBLE APTE À ÊTRE CONNECTÉ PAR LEDIT PROCEDE**
VERFAHREN ZUM VERBINDEN EINER BAUTEILGRUPPE BESTEHEND AUS DREI TEILEN UND BAUTEILGRUPPE GEEIGNET ZUM VERBINDEN MITTELS BESAGTEM VERFAHREN
METHOD OF CONNECTING AN ASSEMBLY CONSISTING OF THREE PARTS AND ASSEMBLY SUITABLE TO BE CONNECTED BY SAID METHOD

(30) Priorité: 28.11.2011 FR 1160869
(43) Date de publication de la demande: 29.05.2013
(73) Titulaire: Faurecia Automotive Composites, 92000 Nanterre (FR)
(72) Inventeur: Py, Jean, 53260 ENTRAMMES (FR); Amosse, Yannick, 44470 CARQUEFOU (FR); Cassard, Jean-Baptiste, 53810 Change (FR)
(74) Mandataire: Lavoix

(56) Documents cités:
- EP-A1- 1 225 000
- EP-A1- 1 923 577
- WO-A1-2009/138709
- DE-U1- 8 805 874
- US-A1- 2002 185 207

## Description

La présente invention concerne un procédé d'élaboration d'un ensemble comprenant au moins une pièce de structure composite, une pièce d'interface métallique et une pièce de structure métallique, un sous-ensemble et l'ensemble obtenus par ledit procédé.

Pour la fabrication de nombreux produits, tels qu'en particulier les véhicules automobiles, il est nécessaire d'assembler entre elles des pièces composites et des pièces métalliques.

Dans le cas de fabrication en grande série, l'assemblage doit se faire en un temps court sur une chaîne de fabrication le long de laquelle les produits défilent.

Pour réduire le temps d'assemblage de la pièce de structure composite à la pièce de structure métallique qui défile sur la chaîne, il est connu d'utiliser une pièce d'interface métallique entre la pièce de structure composite et la pièce de structure métallique, cette pièce d'interface métallique étant destinée à être soudée par points sur la pièce de structure métallique, la soudure par points étant l'un des rares procédés d'assemblage compatible avec les temps de cycle et les cadences de fabrication.

Jusqu'à présent, l'assemblage entre pièce de structure composite et pièce d'interface métallique s'opère par collage ou par surmoulage. A chaque fois, le procédé d'assemblage est long, et la tenue dans le temps de l'assemblage incertaine.

Un but de la présente invention est donc de proposer un nouveau procédé de pré-assemblage de la pièce de structure composite à la pièce d'interface métallique en un temps court sans nuire à la facilité d'assemblage par soudure de la pièce d'interface métallique à la pièce de structure métallique.

Un autre but de la présente invention est de proposer un procédé de pré-assemblage de la pièce de structure composite à la pièce d'interface métallique dont la conception permet un assemblage excluant toute sollicitation de la pièce de structure composite pour éviter de nuire à la résistance mécanique et d'endommager la pièce de structure composite qui n'accepte pas les concentrations de contraintes.

A cet effet, l'invention a pour objet un procédé d'élaboration d'un ensemble comprenant au moins une pièce de structure composite, une pièce d'interface métallique et une pièce de structure métallique selon la revendication 1, ledit procédé comprenant :
- une étape d'assemblage de la pièce de structure composite à la pièce d'interface métallique pour former un sous-ensemble et
- une étape d'assemblage par soudure de la pièce d'interface métallique dudit sous-ensemble à la pièce de structure métallique pour former ledit ensemble, caractérisé en ce que, les pièces de structure composite et d'interface métallique étant pré-équipées de moyens de liaison complémentaires de type mâle/femelle d'assemblage et de moyens de verrouillage de ladite liaison, ledit procédé comprend, au cours de l'étape d'assemblage de la pièce de structure composite à la pièce d'interface métallique pour former un sous-ensemble, une phase de pré-assemblage de la pièce de structure composite et de la pièce d'interface métallique par emboîtement des moyens de liaison complémentaires mâle/femelle dits d'assemblage et une phase de verrouillage dudit emboîtement par déformation par pressage d'au moins une partie des moyens de verrouillage pré-équipant la pièce d'interface métallique, lesdits moyens de verrouillage étant, de préférence, des moyens de liaison complémentaires de type mâle/femelle aptes, à l'état assemblé desdites pièces par leurs moyens de liaison d'assemblage, à passer par déformation par pressage, de l'état désaccouplé à l'état couplé correspondant à la configuration active de verrouillage.

La phase de pré-assemblage par engagement de formes géométriques complémentaires de la pièce de structure composite et de la pièce d'interface métallique permet, de manière simple, et sans sollicitation de la pièce de structure composite, un pré-positionnement rapide desdites pièces entre elles et une limitation des possibilités de déplacement relatif desdites pièces entre elles.

La phase de verrouillage opérée par simple déformation par pressage à l'aide, de préférence, d'un seul coup de presse, permet d'assurer le maintien à l'état assemblé des pièces pré-assemblées.

La déformation des moyens de verrouillage s'opère sur au moins une partie des moyens de verrouillage pré-équipant la pièce d'interface métallique et non, de préférence, sur la partie des moyens de verrouillage pré-équipant la pièce de structure composite, de sorte que la pièce de structure composite demeure inchangée.

De préférence, les moyens de verrouillage sont des moyens de liaison complémentaires de type mâle/femelle distincts des moyens de liaison complémentaires mâle/femelle d'assemblage.

De préférence, la partie desdits moyens de verrouillage pré-équipant la pièce d'interface métallique est la partie mâle desdits moyens de verrouillage, cette partie mâle des moyens de verrouillage étant la partie déformable des moyens de verrouillage apte, à l'état assemblé desdites pièces par leurs moyens de liaison d'assemblage, à passer, par déformation par pressage, de l'état désaccouplé des moyens de verrouillage à l'état couplé desdits moyens de verrouillage correspondant à la configuration active de verrouillage.

De préférence, au moins une partie des moyens de verrouillage étant formée, pour la pièce d'interface métallique, de languette(s) dite(s) de verrouillage, et pour la pièce de structure composite, d'ouverture(s) ou lumière(s), la ou chaque ouverture ou lumière étant positionnable en correspondance d'une languette, ledit procédé comprend, au cours de la phase de verrouillage dudit emboîtement, une déformation par pressage de la ou des languettes de verrouillage de la pièce d'interface métallique dans le sens d'une introduction de la ou de chaque languette dans l'ouverture ou lumière correspondante de la pièce de structure composite.

A nouveau, cette solution d'assemblage est rapide, puisque réalisable par simple pressage, notamment en un seul coup de presse, et fiable, car elle ne sollicite pas la pièce de structure composite.

De préférence, la ou chaque languette de verrouillage présentant une section transversale en V, au cours de la phase de verrouillage, on déforme ladite languette par aplatissement du V.

De préférence, les moyens de liaison d'assemblage des pièces de structure composite et d'interface métallique comprenant au moins deux séries de moyens de liaison, au cours de la phase de pré-assemblage, on assemble la première série de moyens de liaison mâle/femelle d'assemblage entre eux puis la deuxième série de moyens de moyens de liaison mâle/femelle d'assemblage entre eux.

Ces deux séries de moyens de liaison d'assemblage permettent d'obtenir un pré-positionnement rapide et fiable desdites pièces entre elles.

De préférence, la première série de moyens de liaison d'assemblage étant du type languette/ouverture et la deuxième série de moyens de liaison d'assemblage étant du type plot/ouverture, lesdites ouvertures étant de préférence portées par la pièce d'interface métallique, au cours de la phase de pré-assemblage, on introduit la ou les languettes de la première série de moyens de liaison de la pièce de structure composite à l'intérieur de la ou des ouvertures en correspondance de la pièce métallique d'interface puis, par déplacement angulaire des pièces entre elles autour de ladite liaison, on rapproche les pièces entre elles jusqu'à positionnement des plots de la deuxième série de moyens de liaison de la pièce de structure composite à l'intérieur des ouvertures en correspondance de la pièce métallique d'interface, et, au cours de la phase de verrouillage, on déforme par pressage au moins une partie des moyens de verrouillage pour le passage desdits moyens de verrouillage d'une configuration inactive à une configuration active dans laquelle, tout déplacement angulaire des pièces dans le sens d'une sortie des plots des ouvertures est limité ou empêché.

L'invention a encore pour objet un ensemble apte à être élaboré par mise en oeuvre d'un procédé conforme à celui décrit ci-dessus, ledit ensemble comprenant au moins une pièce de structure composite, une pièce d'interface métallique et une pièce de structure métallique, la pièce de structure composite et la pièce d'interface métallique formant un sous-ensemble soudé, via la pièce d'interface métallique, à la pièce de structure métallique, caractérisé en ce que la pièce de structure composite et la pièce d'interface métallique sont, pour leur maintien à l'état assemblé, munies de moyens de liaison complémentaires de type mâle/femelle dits d'assemblage et de moyens de verrouillage pré-équipant lesdits pièces, au moins une partie desdits moyens de verrouillage pré-équipant la pièce d'interface métallique étant des moyens déformables aptes à passer, sous l'effet d'une pression, d'une configuration inactive à une configuration active, à l'état assemblé desdites pièces par leurs moyens de liaison complémentaires d'assemblage.

De préférence, au moins une partie des moyens de verrouillage est formée, pour la pièce d'interface métallique, de languette(s) dite(s) de verrouillage, et pour la pièce de structure composite, d'ouverture(s) ou lumière(s), chaque ouverture ou lumière étant positionnable en correspondance d'une languette à l'état pré-assemblé desdites pièces par leurs moyens de liaison d'assemblage, la ou chaque languette de verrouillage étant une languette déformable apte, sous l'effet d'un pressage, à se déformer dans le sens d'une introduction de la languette dans l'ouverture ou lumière correspondante de la pièce de structure composite, à l'état pré-assemblé desdites pièces par leurs moyens de liaison d'assemblage.

De préférence, la ou chaque languette de verrouillage de la pièce d'interface métallique présente, avant déformation, une section transversale en V.

De préférence, les moyens de liaison d'assemblage des pièces de structure composite et d'interface métallique sont des moyens de liaison comprenant au moins deux séries de moyens de liaison.

De préférence, la première série de moyens de liaison d'assemblage est du type languette/ouverture et la deuxième série de moyens de liaison d'assemblage est du type plot/ouverture, lesdites ouvertures étant de préférence portées à chaque fois par la pièce d'interface métallique.

De préférence, les moyens de liaison d'assemblage de chacune des séries et les moyens de verrouillage sont organisés chacun sous forme d'une rangée d'organes de liaison ou de verrouillage, lesdites rangées étant sur une même pièce parallèles entre elles.

L'invention a encore pour objet un sous-ensemble du type comprenant une pièce de structure composite et une pièce d'interface métallique, ledit sous-ensemble étant destiné, via sa pièce d'interface métallique, à être soudé à une pièce de structure métallique pour former un ensemble conforme à celui décrit ci-dessus, caractérisé que la pièce de structure composite et la pièce d'interface métallique sont, pour leur maintien à l'état assemblé, munies de moyens de liaison complémentaires de type mâle/femelle dits d'assemblage et de moyens de verrouillage pré-équipant lesdites pièces, au moins une partie desdits moyens de verrouillage étant des moyens déformables aptes à passer sous l'effet d'une pression, et à l'état assemblé desdites pièces par leurs moyens de liaison d'assemblage, d'une configuration inactive à une configuration active, au moins une partie de ces moyens de verrouillage étant formée, pour la pièce d'interface métallique, de languette(s) dite(s) de verrouillage, et, pour la pièce de structure composite, d'ouverture(s) ou lumière(s), chaque ouverture ou lumière étant positionnable en correspondance d'une languette, la ou chaque languette étant une languette déformable apte, sous l'effet d'un pressage, à se déformer dans le sens d'une introduction de la languette dans l'ouverture ou lumière correspondante de la pièce de structure composite à l'état pré-assemblé desdites pièces par leurs moyens de liaison d'assemblage.

L'invention sera bien comprise à la lecture de la description suivante d'exemples de réalisation, en référence aux dessins annexés dans lesquels :

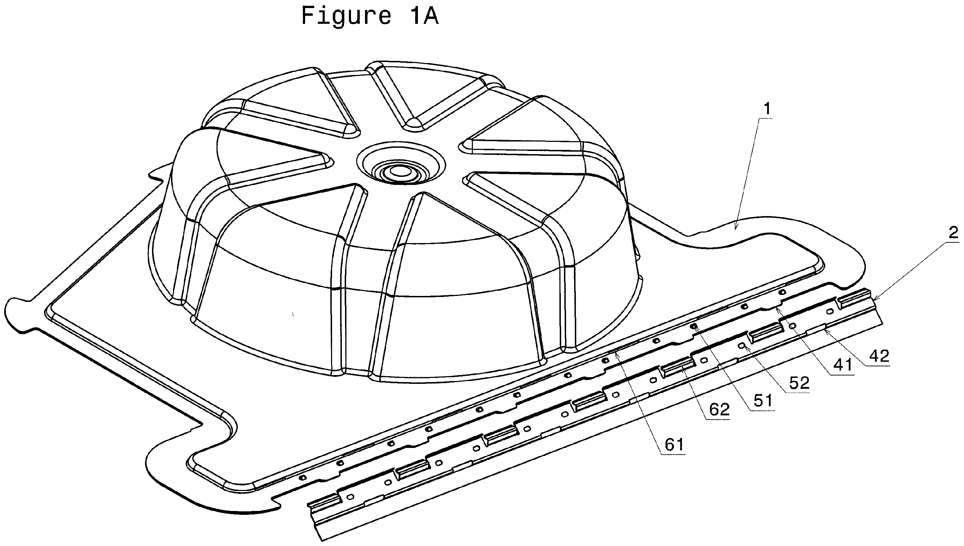

La figure 1A représente une vue en perspective d'une pièce de structure composite prête à être assemblée avec une pièce d'interface métallique ;

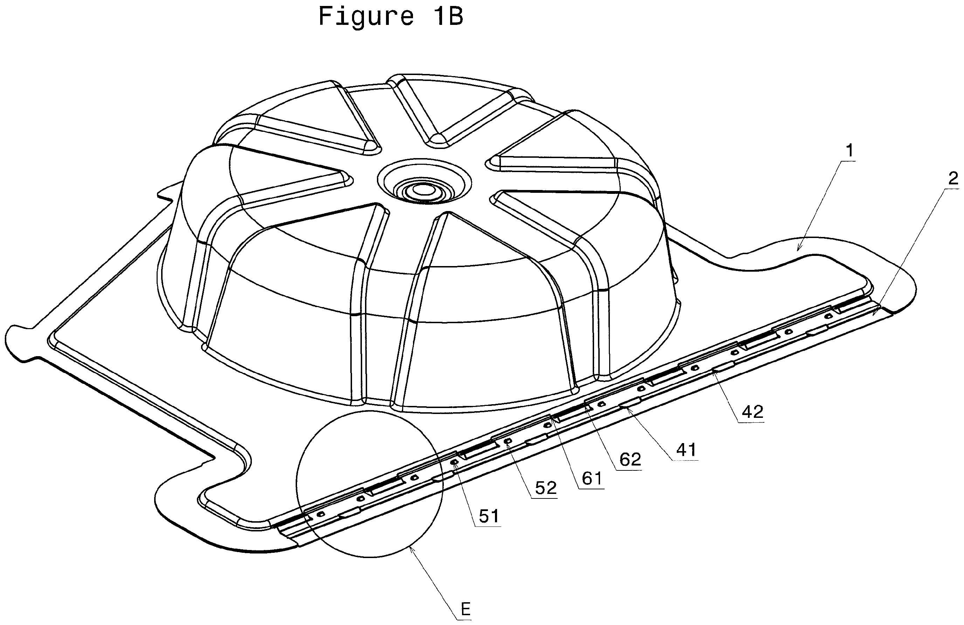

La figure 1B représente une vue en perspective d'une pièce de structure composite à l'état assemblé avec une pièce d'interface métallique ;

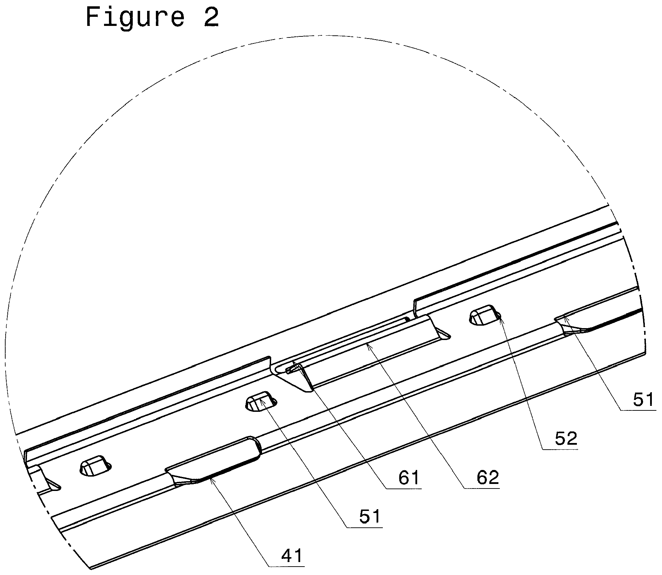

La figure 2 représente une vue de détail E de la figure 1B ;

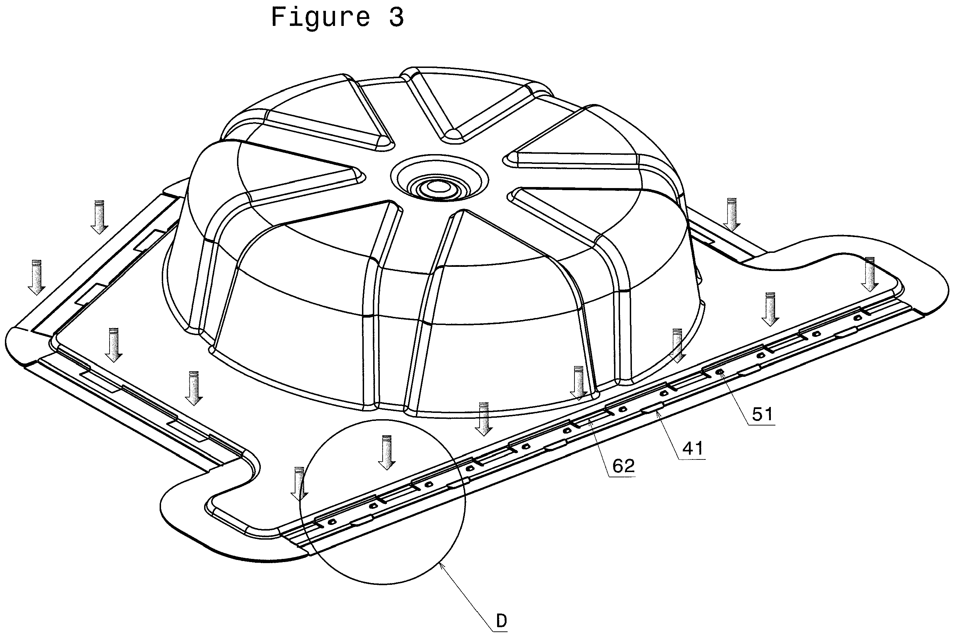

La figure 3 représente une vue en perspective d'une pièce de structure composite à l'état verrouillée avec une pièce d'interface métallique ;

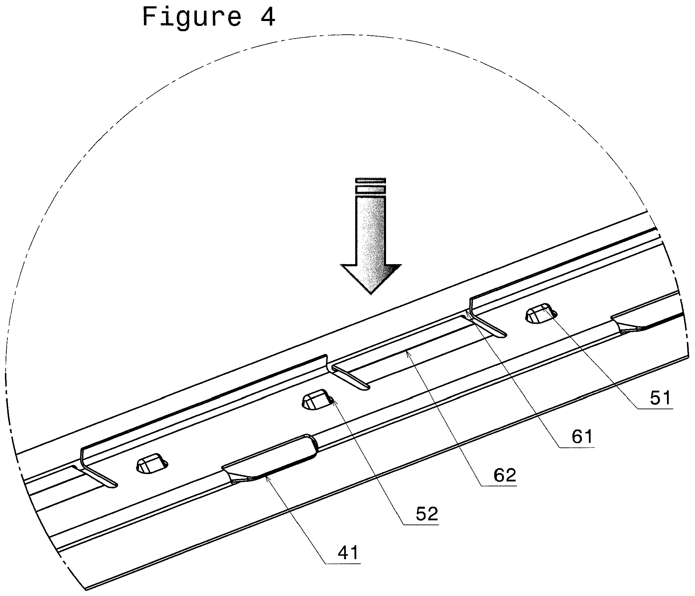

La figure 4 représente une vue de détail D de la figure 3 ;

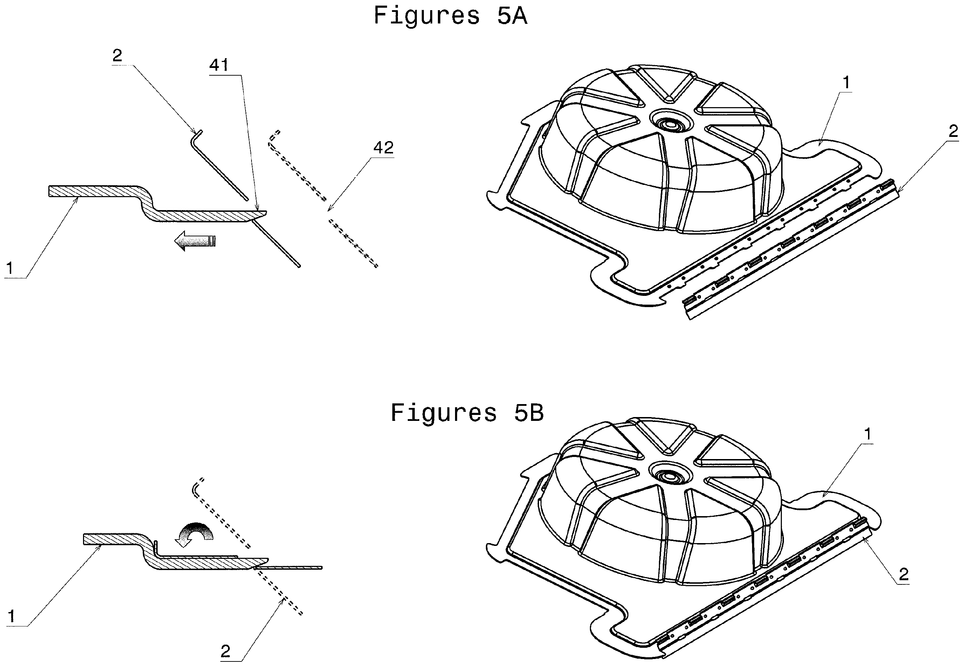

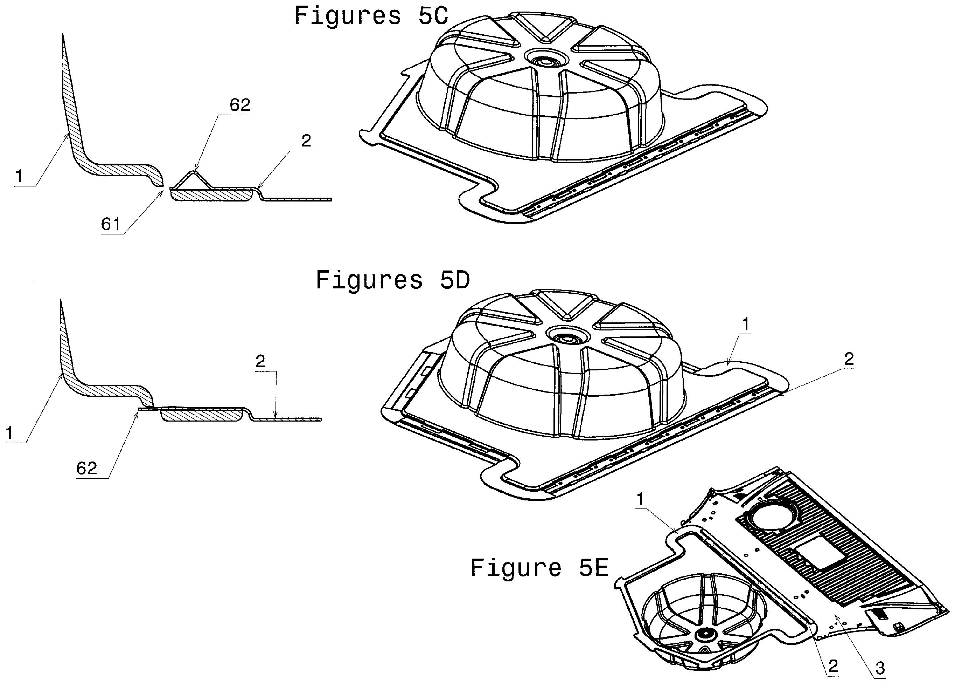

Les figures 5A à 5D représentent à chaque fois, sous forme de deux vues parallèles, les différentes étapes du procédé d'élaboration dudit ensemble ;
La figure 5E représente l'ensemble fini.

Comme mentionné ci-dessus, l'invention a pour objet un procédé d'élaboration d'un ensemble comprenant au moins une pièce de structure composite 1, une pièce d'interface métallique 2 et une pièce de structure métallique 3, le sous-ensemble réalisé et l'ensemble obtenu.

Dans les exemples représentés, la pièce de structure composite 1 est une pièce en forme de cuvette apte à former un bac de roue de secours, la pièce de structure métallique 3 est un châssis d'engin roulant et la pièce d'interface métallique 2 se présente sous forme d'un corps allongé positionnable le long d'un rebord de ladite cuvette.

Bien évidemment, l'invention n'est pas limitée à l'application représentée.

L'invention s'applique plus particulièrement aux ensembles, dont la pièce de structure métallique est fabriquée en grande série sur une chaîne de production, dont les pièces à rapporter doivent être assemblées rapidement et généralement par soudure à ladite pièce de structure métallique, comme cela est le cas, par exemple, dans le domaine de l'automobile pour les châssis ou caisses de véhicules.

Comme mentionné ci-dessus, le procédé comprend une étape d'assemblage de la pièce de structure composite 1 à la pièce d'interface métallique 2 pour former un sous-ensemble, et une étape d'assemblage par soudure de la pièce d'interface métallique 2 dudit sous-ensemble à la pièce de structure métallique 3 pour former ledit ensemble.

Les pièces de structure composite 1 et d'interface métallique 2 sont pré-équipées de moyens 41, 42 ; 51, 52 de liaison complémentaires de type mâle/femelle d'assemblage et de moyens 61, 62 de verrouillage de ladite liaison.

Dans les exemples représentés, les moyens 41, 42 ; 51, 52 de liaison d'assemblage des pièces de structure composite 1 et d'interface métallique 2 sont des moyens de liaison comprenant au moins deux séries de moyens de liaison.

La première série de moyens 41 ; 42 de liaison d'assemblage est du type languette/ouverture et la deuxième série 51 ; 52 de moyens de liaison d'assemblage est du type plot/ouverture, lesdites ouvertures étant portées à chaque fois par la pièce d'interface métallique 2. Bien évidemment, les ouvertures auraient pu être ménagées sur la pièce de structure composite 1. De même, une solution dans laquelle les languettes sont ménagées sur la pièce d'interface métallique 2 et les plots sur l'une quelconque des pièces n'est pas exclue.

Les moyens de verrouillage sont également des moyens de liaison complémentaires de type mâle/femelle aptes, à l'état assemblé desdites pièces par leurs moyens de liaison d'assemblage, à passer par déformation par pressage de la partie des moyens de verrouillage pré-équipant la pièce d'interface métallique 2, de l'état désaccouplé desdits moyens de verrouillage à l'état couplé desdits moyens de verrouillage correspondant à la configuration active de verrouillage.

Dans les exemples représentés, la partie des moyens de verrouillage pré-équipant la pièce d'interface métallique 2 est la partie mâle des moyens de verrouillage.

Cette partie des moyens de verrouillage pré-équipant la pièce d'interface métallique 2 est formée de languettes 62 dites de verrouillage.

La partie des moyens de verrouillage pré-équipant la pièce de structure composite 1 est formée d'ouvertures ou lumières 61. Chaque ouverture 61 ou lumière est positionnable en correspondance d'une languette 62 à l'état pré-assemblé des pièces 1, 2 par leurs moyens de liaison d'assemblage.

La ou chaque languette 62 de verrouillage est une languette déformable apte, sous l'effet d'un pressage, à se déformer dans le sens d'une introduction de la languette 62 dans l'ouverture 61, ou lumière, correspondante de la pièce de structure composite 1, à l'état assemblé desdites pièces par leurs moyens 41, 42 ; 51, 52 de liaison d'assemblage.

En particulier, dans les exemples représentés, la pièce d'interface métallique 2 est équipée de plusieurs languettes 62 de verrouillage présentant chacune, avant déformation, une section transversale en V.

Du fait des moyens d'assemblage et des moyens de verrouillage, tels que décrits ci-dessus, la pièce de structure composite 1 comporte donc, depuis son bord périphérique externe en direction de son centre, une rangée de languettes 41 réalisées par encochage du bord de ladite pièce, une rangée de plots 51 et une rangée de lumières 61, lesdites rangées étant parallèles entre elles.

La pièce d'interface métallique 2 comporte, quant à elle, avant assemblage, une rangée de languettes 62 de verrouillage déformables ménagées le long d'un bord de ladite pièce, une rangée de perçages ou poinçonnages 52 aptes à loger les plots 51 et une rangée de lumières 42 aptes à loger les languettes 41 d'assemblage.

Ledit procédé comprend donc au cours de l'étape d'assemblage, une phase de pré-assemblage de la pièce de structure composite 1 et de la pièce d'interface métallique 2 par emboîtement des moyens 41, 42 ; 51, 52 de liaison complémentaires mâle/femelle dits d'assemblage, et une phase de verrouillage dudit emboîtement par déformation par pressage d'au moins une partie des moyens 61, 62 de verrouillage pré-équipant la pièce d'interface métallique 2.

En particulier, au cours de la phase de pré-assemblage, on introduit la ou les languettes de la première série de moyens de liaison de la pièce 1 de structure composite à l'intérieur de la ou des ouvertures 42 en correspondance de la pièce d'interface métallique 2, puis par déplacement angulaire des pièces 1, 2 entre elles autour de la liaison, on rapproche les pièces entre elles jusqu'à positionnement des plots 51 de la deuxième série de moyens de liaison de la pièce de structure composite 1 à l'intérieur des ouvertures 52 en correspondance de la pièce métallique d'interface 2, et en ce qu'au cours du verrouillage, on déforme par pressage au moins une partie des moyens de verrouillage. En l'occurrence on déforme chaque languette 62 par aplatissement du V de ladite languette pour le passage des moyens de verrouillage d'une configuration inactive à une configuration active dans laquelle chaque languette 62 pénètre dans l'ouverture 61 ménagée en correspondance dans la pièce de structure composite 1, de sorte que, à l'état verrouillé, tout déplacement angulaire des pièces 1, 2 dans le sens d'une sortie des plots des ouvertures est limité ou empêché.

Les pièces sont ainsi parfaitement assemblées entre elles sans aucune sollicitation au cours de cet assemblage de la pièce de structure composite 1.

## Revendications

1. Procédé d'élaboration d'un ensemble comprenant au moins une pièce de structure composite (1), une pièce d'interface métallique (2) et une pièce de structure métallique (3), ledit procédé comprenant :
- une étape d'assemblage de la pièce de structure composite (1) à la pièce d'interface métallique (2) pour former un sous-ensemble et
- une étape d'assemblage par soudure de la pièce d'interface métallique (2) dudit sous-ensemble à la pièce de structure métallique (3) pour former ledit ensemble, où les pièces de structure composite (1) et d'interface métallique (2) étant pré-équipées de moyens (41 ; 42) (51 ; 52) de liaison complémentaires de type mâle/femelle d'assemblage et de moyens (61 ; 62) de verrouillage de ladite liaison, ledit procédé comprend, au cours de l'étape d'assemblage de la pièce de structure composite (1) à la pièce d'interface métallique (2) pour former un sous-ensemble, une phase de pré-assemblage de la pièce de structure composite (1) et de la pièce d'interface métallique (2) par emboîtement des moyens (41 ; 42) (51 ; 52) de liaison complémentaires mâle/femelle dits d'assemblage et une phase de verrouillage dudit emboîtement par déformation par pressage d'au moins une partie des moyens (61 ; 62) de verrouillage pré-équipant la pièce d'interface métallique (2), lesdits moyens (61 ; 62) de verrouillage étant des moyens de liaison complémentaires de type mâle/femelle distincts des moyens de liaison complémentaires mâle/femelle d'assemblage et étant aptes, à l'état assemblé desdites pièces (1, 2) par leurs moyens (41 ; 42) (51 ; 52) de liaison d'assemblage, à passer par déformation par simple pressage d'un seul coup de presse, de l'état désaccouplé à l'état couplé correspondant à la configuration active de verrouillage.

2. Procédé selon la revendication 1,
**caractérisé en ce qu'**au moins une partie des moyens (61 ; 62) de verrouillage étant formée, pour la pièce (2) d'interface métallique, de languette(s) (62) dite(s) de verrouillage, et pour la pièce (1) de structure composite, d'ouverture(s) (61) ou lumière(s), la ou chaque ouverture (61) ou lumière étant positionnable en correspondance d'une languette (62),
ledit procédé comprend, au cours de la phase de verrouillage dudit emboîtement, une déformation par pressage de la ou des languettes (62) de verrouillage de la pièce d'interface métallique (2) dans le sens d'une introduction de la ou de chaque languette (62) dans l'ouverture (61) ou lumière correspondante de la pièce de structure composite (1).

3. Procédé selon la revendication 2,
**caractérisé en ce que** la ou chaque languette (62) de verrouillage présentant une section transversale en V, au cours de la phase de verrouillage, on déforme ladite languette (62) par aplatissement du V.

4. Procédé selon l'une des revendications 1 à 3,
**caractérisé en ce que** les moyens (41 ; 42) (51 ; 52) de liaison d'assemblage des pièces de structure composite (1) et d'interface métallique (2) comprenant au moins deux séries de moyens de liaison, au cours de la phase de pré-assemblage, on assemble la première série de moyens (41 ; 42) de liaison mâle/femelle d'assemblage entre eux puis la deuxième série de moyens de moyens (51 ; 52) de liaison mâle/femelle d'assemblage entre eux.

5. Procédé selon la revendication 4,
**caractérisé en ce que** la première série de moyens (41 ; 42) de liaison d'assemblage étant du type languette/ouverture et **en ce que** la deuxième série de moyens (51 ; 52) de liaison d'assemblage étant du type plot/ouverture, lesdites ouvertures étant de préférence portées par la pièce d'interface métallique (2), au cours de la phase de pré-assemblage, on introduit la ou les languettes (41) de la première série de moyens de liaison de la pièce (1) de structure composite à l'intérieur de la ou des ouvertures (42) en correspondance de la pièce métallique d'interface (2) puis, par déplacement angulaire des pièces (1, 2) entre elles autour de ladite liaison, on rapproche les pièces (1, 2) entre elles jusqu'à positionnement des plots (51) de la deuxième série de moyens de liaison de la pièce de structure composite (1) à l'intérieur des ouvertures (52) en correspondance de la pièce métallique d'interface (2) et **en ce qu'**au cours de la phase de verrouillage, on déforme par pressage au moins une partie des moyens (61, 62) de verrouillage pour le passage desdits moyens de verrouillage d'une configuration inactive à une configuration active dans laquelle, tout déplacement angulaire des pièces (1, 2) dans le sens d'une sortie des plots (51) des ouvertures (52) est limité ou empêché.

6. Sous-ensemble du type comprenant une pièce de structure composite (1) et une pièce d'interface métallique (2), ledit sous-ensemble étant destiné, via sa pièce d'interface métallique (2), à être soudé à une pièce de structure métallique (3) pour former un ensemble, où la pièce de structure composite (1) et la pièce d'interface métallique (2) sont, pour leur maintien à l'état assemblé, munies de moyens (41 ; 42) (51 ; 52) de liaison complémentaires de type mâle/femelle dits d'assemblage et de moyens (61 ; 62) de verrouillage pré-équipant lesdites pièces (1 ; 2), au moins une partie desdits moyens (61 ; 62) de verrouillage étant des moyens déformables aptes à passer sous l'effet d'une pression, et à l'état assemblé desdites pièces (1 ; 2) par leurs moyens (41 ; 42) (51 ; 52) de liaison d'assemblage, d'une configuration inactive à une configuration active, au moins une partie de ces moyens de verrouillage étant formée, pour la pièce d'interface métallique (2), de languette(s) (62) dite(s) de verrouillage, et, pour la pièce de structure composite (1), d'ouverture(s) (61) ou lumière(s), chaque ouverture (61) ou lumière étant positionnable en correspondance d'une languette (62), la ou chaque languette (62) étant une languette déformable apte, sous l'effet d'un pressage, à se déformer dans le sens d'une introduction de la languette (62) dans l'ouverture (61) ou lumière correspondante de la pièce de structure composite (1) à l'état pré-assemblé desdites pièces (1, 2) par leurs moyens (41 ; 42) (51 ; 52) de liaison d'assemblage.

7. Ensemble apte à être élaboré par mise en oeuvre d'un procédé conforme à l'une des revendications 1 à 5, ledit ensemble comprenant au moins un sous-ensemble selon la revendication 6 et une pièce de structure métallique (3), la pièce de structure composite (1) et la pièce d'interface métallique (2) formant un sous-ensemble soudé, via la pièce d'interface métallique (2), à la pièce de structure métallique (3), la pièce de structure composite (1) et la pièce d'interface métallique (2) étant, pour leur maintien à l'état assemblé, munies de moyens (41 ; 42) (51 ; 52) de liaison complémentaires de type mâle/femelle dits d'assemblage et de moyens (61 ; 62) de verrouillage pré-équipant lesdits pièces (1 ; 2), au moins une partie (62) desdits moyens (61 ; 62) de verrouillage pré-équipant la pièce d'interface métallique (2) étant des moyens déformables, où les moyens (61 ; 62) de verrouillage sont des moyens de liaison complémentaires de type mâle/femelle distincts des moyens (41 ;42) (51 ;52) de liaison complémentaires mâle/femelle d'assemblage et en ce qu'au moins une partie des moyens (61, 62) de verrouillage, aptes à passer, sous l'effet d'une pression, d'une configuration inactive à une configuration active, à l'état assemblé desdites pièces (1 ; 2) par leurs moyens (41 ; 42) (51 ; 52) de liaison complémentaires d'assemblage, est formée, pour la pièce d'interface métallique (2), de languette(s) (62) dite(s) de verrouillage, et pour la pièce de structure composite (1), d'ouverture(s) (61) ou lumière(s), chaque ouverture (61) ou lumière étant positionnable en correspondance d'une languette (62) à l'état pré-assemblé desdites pièces (1, 2) par leurs moyens (41 ; 42) (51 ; 52) de liaison d'assemblage, la ou chaque languette (62) de verrouillage étant une languette déformable apte, sous l'effet d'un pressage, à se déformer dans le sens d'une introduction de la languette (62) dans l'ouverture (61) ou lumière correspondante de la pièce de structure composite (1), à l'état pré-assemblé desdites pièces (1, 2) par leurs moyens (41 ; 42) (51 ; 52) de liaison d'assemblage.

8. Ensemble selon la revendication 7,
**caractérisé en ce que** la ou chaque languette (62) de verrouillage de la pièce d'interface métallique (2) présente, avant déformation, une section transversale en V.

9. Ensemble selon la revendication 7 ou 8,
**caractérisé en ce que** les moyens (41 ; 42) (51 ; 52) de liaison d'assemblage des pièces (1 ; 2) de structure composite et d'interface métallique sont des moyens de liaison comprenant au moins deux séries de moyens de liaison.

10. Ensemble selon la revendication 9,
**caractérisé en ce que** la première série de moyens (41 ; 42) de liaison d'assemblage est du type languette/ouverture et **en ce que** la deuxième série (51 ; 52) de moyens de liaison d'assemblage est du type plot/ouverture, lesdites ouvertures étant, de préférence, portées à chaque fois par la pièce d'interface métallique (2).

11. Ensemble selon la revendication 9 ou 10,
**caractérisé en ce que** les moyens (41 ; 42) (51 ; 52) de liaison d'assemblage de chacune des séries et les moyens (61 ; 62) de verrouillage sont organisés chacun sous forme d'une rangée d'organes de liaison ou de verrouillage, lesdites rangées étant sur une même pièce (1 ; 2) parallèles entre elles.

12. Ensemble selon l'une des revendications 7 à 11,
**caractérisé en ce que** la pièce de structure composite (1) est une pièce en forme de cuvette apte à former un bac de roue de secours, **en ce que** la pièce de structure métallique (3) est un châssis d'engin roulant et **en ce que** la pièce d'interface métallique (2) se présente sous forme d'un corps allongé positionnable le long d'un rebord de ladite cuvette.

## Patentansprüche

1. Verfahren zur Herstellung einer Einrichtung, die aufweist wenigstens ein Verbundstrukturteil (1), ein metallisches Schnittstelleteil (2) und ein metallisches Strukturteil (3), wobei das Verfahren aufweist:
- einen Schritt der Montage des Verbundstrukturteils (1) an dem metallischen Schnittstelleteil (2) zum Bilden einer Untereinrichtung, und
- einen Schritt der Montage durch Schweißen des metallischen Schnittstelleteils (2) der besagten Untereinrichtung an dem metallischen Strukturteil (3) zum Bilden der besagten Einrichtung,
wobei das Verbundstrukturteil (1) und das metallische Schnittstelleteil (2) mit komplementären Mitteln (41; 42) (51; 52) zur Verbindung des Einfüge/Aufnahme-Typs zur Montage und mit Mitteln (61; 62) zur Verriegelung der besagten Verbindung vorausgestattet sind, wobei das besagte Verfahren aufweist, während des Verlaufs des Schritts der Montage des Verbindungstrukturteils (1) an dem metallischen Schnittstelleteil (2) zum Bilden einer Untereinrichtung, eine Phase der Vormontage des Verbundstrukturteils (1) und des metallischen Schnittstelleteils (2) durch Ineinanderfügen der besagten komplementären Mittel (41; 42) (51; 52) zur Einfüge/Aufnahme-Verbindung zur Montage und eine Phase der Verriegelung der Ineinander-Fügung durch Deformation via Pressung wenigstens eines Teils der Mittel (61; 62) zur Verriegelung, mit welchen das metallische Schnittstelleteil (2) vorausgestattet ist, wobei die besagten Mittel (61; 62) zur Verriegelung komplementäre Mittel zur Verbindung des Einfüge/Aufnahme-Typs sind, die von den komplementären Mitteln zur Einfüge/Aufnahme-Verbindung zur Montage verschieden sind und die imstande sind, im Zusammenbauzustand der besagten Teile (1, 2), der durch deren Mittel (41; 42) (51; 52) zur Verbindung zur Montage erreicht ist, durch Deformation via einfache Pressung von einem einzigen Pressstoß vom Nichtverbindungszustand in den Verbindungszustand überzugehen, der der Verriegelungs-Aktivkonfiguration entspricht.

2. Verfahren gemäß Anspruch 1,
**dadurch gekennzeichnet, dass** wenigstens ein Teil der Mittel (61; 62) zur Verriegelung, für das metallische Schnittstelleteil (2), von einer/von sogenannten Zunge/n (62) zur Verriegelung und, für das Verbundstrukturteil (1), von einer/von Öffnung/en (61) oder Aussparung/en gebildet ist, wobei die oder jede Öffnung (61) oder Aussparung korrespondierend zu einer Zunge (62) positionierbar ist, wobei das Verfahren aufweist, im Verlauf der Phase zur Verriegelung der besagten Ineinander-Fügung, eine Deformation via Pressung der Zunge oder der Zungen (62) zur Verriegelung des metallischen Schnittstelleteils (2) in Richtung einer Einführung der oder jeder Zunge (62) in die Öffnung (61) oder Aussparung, die zu dem Verbundstrukturteil (1) korrespondiert.

3. Verfahren gemäß Anspruch 2,
**dadurch gekennzeichnet, dass** die oder jede Zunge (62) zur Verriegelung einen V-Querschnitt hat, wobei man im Verlauf der Phase zur Verriegelung die besagte Zunge (62) durch Abplatten des V deformiert.

4. Verfahren gemäß einem der Ansprüche 1 bis 3,
**dadurch gekennzeichnet, dass** die Mittel (41; 42) (51; 52) zur Verbindung zur Montage des Verbundstrukturteils (1) und des metallischen Schnittstelleteils (2) wenigstens zwei Serien von Mitteln zur Verbindung aufweisen, wobei man im Verlauf der Phase zur Vormontage die erste Serie von Mitteln (41; 42) zur Einfüge/Aufnahme-Verbindung zur Montage aneinander montiert und dann die zweite Serie von Mitteln von Mitteln (51; 52) zur Einfüge/Aufnahme-Verbindung zur Montage aneinander montiert.

5. Verfahren gemäß Anspruch 4,
**dadurch gekennzeichnet, dass** die erste Serie von Mitteln (41; 42) zur Verbindung zur Montage vom Typ Zunge/Öffnung ist und dass die zweite Serie von Mitteln (51; 52) zur Verbindung zur Montage vom Typ Stift/Öffnung ist, wobei die besagten Öffnungen bevorzugt getragen werden von dem metallischen Schnittstelleteil (2), wobei man im Verlauf der Phase der Vormontage die Zunge oder Zungen (41) der ersten Serie von Mitteln zur Verbindung des Verbundstrukturteils (1) in das Innere der korrespondierenden Öffnung oder Öffnungen (42) des metallischen Schnittstelleteils (2) einfügt, man dann, durch Winkelverlagerung der Teile (1, 2) zueinander um die besagte Verbindung herum, die Teile (1, 2) zusammenbringt bis die Stifte (51) der zweiten Serie von Mitteln zur Verbindung des Verbundstrukturteils (1) im Inneren der korrespondierenden Öffnungen (52) des metallischen Schnittstelleteils (2) positioniert sind, und dass im Verlauf der Phase zur Verriegelung man via Pressung wenigstens einen Teil der Mittel (61, 62) zur Verriegelung deformiert, sodass die besagten Mittel zur Verriegelung übergehen von einer Inaktiv-Konfiguration in eine Aktiv-Konfiguration, in welcher jegliche Winkelverlagerung der Teile (1, 2) in Richtung eines Heraustretens der Stifte (51) aus den Öffnungen (52) beschränkt oder verhindert ist.

6. Untereinrichtung des Typs aufweisend ein Verbundstrukturteil (1) und ein metallisches Schnittstelleteil (2), wobei die besagte Untereinrichtung vorgesehen ist, um mittels ihres metallischen Schnittstelleteils (2) an einem metallischen Strukturteil (3) angeschweißt zu werden zum Bilden einer Einrichtung,
wobei das Verbundstrukturteil (1) und das metallische Schnittstelleteil (2), für deren Aufrechterhaltung in einem Zusammenbauzustand, versehen sind mit sogenannten komplementären Mitteln (41; 42) (51; 52) zur Verbindung des Einfüge/Aufnahme-Typs zur Montage und Mitteln (61; 62) zur Verriegelung, mit denen die besagten Teile (1; 2) vorausgestattet sind, wobei wenigstens ein Teil der besagten Mittel (61; 62) zur Verriegelung deformierbare Mittel sind, die imstande sind unter der Wirkung einer Pressung und im Zusammenbauzustand der Teile (1; 2), der durch deren Mittel (41; 42) (51; 52) zur Verbindung zur Montage erreicht ist, von einer Inaktiv-Konfiguration in eine Aktiv-Konfiguration überzugehen, wobei wenigstens ein Teil dieser Mittel zur Verriegelung, für das metallische Schnittstelleteil (2), von einer oder von sogenannten Zunge/n (62) zur Verriegelung und, für das Verbundstrukturteil (1), von einer oder von Öffnung/en (61) oder Aussparung/en gebildet ist, wobei jede Öffnung (61) oder Aussparung korrespondierend zu einer Zunge (62) positionierbar ist, wobei die oder jede Zunge (62) eine deformierbare Zunge ist, die imstande ist unter der Wirkung einer Pressung sich in Richtung einer Einführung der Zunge (62) in die korrespondierende Öffnung (61) oder Aussparung des Verbundstrukturteils (1) zu verformen im Vormontiert-Zustand der besagten Teile (1, 2), der durch deren Mittel (41; 42) (51; 52) zur Verbindung zur Montage erreicht ist.

7. Einrichtung, die imstande ist hergestellt zu werden durch ein Verfahren gemäß einem der Ansprüche 1 bis 5, wobei die Einrichtung wenigstens eine Untereinrichtung gemäß Anspruch 6 und ein metallisches Strukturteil (3) aufweist, wobei das Verbundstrukturteil (1) und das metallische Schnittstelleteil (2) eine Untereinrichtung bilden, die via das metallische Schnittstelleteil (2) an das metallische Strukturteil (3) geschweißt ist, wobei das Verbundstrukturteil (1) und das metallische Schnittstelleteil (2) zur Aufrechterhaltung deren Zusammenbauzustands ausgestattet sind mit sogenannten komplementären Mitteln (41; 42) (51; 52) zur Verbindung des Einfüge/Aufnahme-Typs zur Montage und mit Mitteln (61; 62) zur Verriegelung, mit denen die besagten Teile (1; 2) vorausgestattet sind, wobei wenigstens ein Teil (62) der besagten Mittel (61; 62) zur Verriegelung, mit denen das metallische Schnittstelleteil (2) vorausgestattet ist, deformierbare Mittel sind, wobei die Mittel (61; 62) zur Verriegelung komplementäre Mittel zur Verbindung des Einfüge/Aufnahme-Typs sind, die von den komplementären Mitteln (41; 42) (51; 52) zur Einfüge/Aufnahme-Verbindung zur Montage verschieden sind, und dass wenigstens ein Teil der Mittel (61, 62) zur Verriegelung, die imstande sind, unter der Wirkung einer Pressung von einer Inaktiv-Konfiguration in eine Aktiv-Konfiguration überzugehen in einem Zusammenbauzustand der besagten Teile (1; 2), der mittels deren komplementäre Mittel (41; 42) (51; 52) zur Verbindung zur Montage erreicht ist, gebildet ist, für das metallische Schnittstelleteil (2), von einer oder von sogenannten Zunge/n (62) zur Verriegelung und, für das Verbundstrukturteil (1), von einer oder von Öffnung/en (61) oder Aussparung/en, wobei jede Öffnung (61) oder Aussparung korrespondierend zu einer Zunge (62) positionierbar ist im Vormontiert-Zustand der besagten Teile (1, 2), der durch deren Mittel (41; 42) (51; 52) zur Verbindung zur Montage erreicht ist, wobei die oder jede Zunge (62) zur Verriegelung eine deformierbare Zunge ist, die imstande ist unter der Wirkung einer Pressung sich in einer Richtung der Einführung der Zunge (62) in die korrespondierende Öffnung (61) oder Aussparung des Verbundstrukturteils (1) zu deformieren in einem Vormontiert-Zustand der besagten Teile (1, 2), der mittels deren Mittel (41; 42) (51; 52) zur Verbindung zur Montage erreicht ist.

8. Einrichtung gemäß Anspruch 7,
**dadurch gekennzeichnet, dass** die oder jede Zunge (62) zur Verriegelung des metallischen Schnittstelleteils (2) vor der Deformation einen V-Querschnitt hat.

9. Einrichtung gemäß Anspruch 7 oder 8,
**dadurch gekennzeichnet, dass** die Mittel (41; 42) (51; 52) zur Verbindung zur Montage des Verbundstrukturteils (1; 2) und des metallischen Schnittstelleteils Mittel zur Verbindung sind, die wenigstens zwei Serien von Mitteln zur Verbindung aufweisen.

10. Einrichtung gemäß Anspruch 9,
**dadurch gekennzeichnet, dass** die erste Serie von Mitteln (41; 42) zur Verbindung zur Montage vom Typ Zunge/Öffnung ist und dass die zweite Serie (51; 52) von Mitteln zur Verbindung zur Montage vom Typ Stift/Öffnung ist, wobei die Öffnungen bevorzugt jeweils getragen werden von dem metallischen Schnittstelleteil (2).

11. Einrichtung gemäß Anspruch 9 oder 10, **dadurch gekennzeichnet, dass** die Mittel (41; 42) (51; 52) zur Verbindung zur Montage jeder der Serien und die Mittel (61; 62) zur Verriegelung jeweils in der Form einer Linie von Organen zur Verbindung oder zur Verriegelung organisiert sind, wobei die besagten Linien auf einem selben Teil (1; 2) zueinander parallel sind.

12. Einrichtung gemäß einem der Ansprüche 7 bis 11, **dadurch gekennzeichnet, dass** das Verbundstrukturteil (1) ein Teil in Form einer Wanne ist, das imstande ist einen Ersatzradkasten zu bilden, dass das metallische Strukturteil (3) ein fahrbarer Maschinenrahmen ist und dass das metallische Schnittstellenteil (2) eine Form eines langgestreckten Körpers hat, der entlang eines Rands der besagten Wanne positionierbar ist.

## Claims

1. A method for elaborating an assembly comprising at least one composite structure part (1), one metal interface part (2) and one metal structure part (3), said method comprising:
- a step for assembling the composite structure part (1) to the metal interface part (2) in order to form a sub-assembly and
- a step for assembling by welding the metal interface part (2) of said sub-assembly to the metal structure part (3) in order to form said assembly,
**characterized in that**, as the composite structure (1) and metal interface (2) parts are pre-equipped with assembling mating connection means (41; 42) (51; 52) of the male/female type and with means (61; 62) for locking said connection, said method comprises, during the step for assembling the composite structure part (1) to the metal interface part (2) in order to form a sub-assembly, a phase for pre-assembling the composite structure part (1) and the metal interface part (2) by interlocking the so-called assembling male/female mating connection means (41; 42) (51; 52) and a phase for locking said interlock by deformation by pressing at least one portion of the locking means (61; 62) pre-equipping the metal interface part (2), said locking means (61; 62) being mating connection means of the male/female type, distinct from the assembling male/female mating connection means and being capable, in the assembled condition of said parts (1, 2) by their assembling connecting means (41; 42) (51; 52), of passing by deformation by simple pressing from a single press stroke, from the uncoupled condition to the coupled condition corresponding to the active locking position.

2. The method according to claim 1,
**characterized in that**, as at least one portion of the locking means (61; 62) is formed, for the metal interface part (2) with so-called locking tab(s) (62), and for the composite structure part (1), with aperture(s) (61) or lumen(s), said or each aperture (61) or lumen being able to be positioned matching a tab (62),
said method comprises, during the phase for locking said interlock, deformation by pressing the locking tab(s) (62) of the metal interface part (2) in the direction for introducing said or each tab (62) into the corresponding aperture (61) or lumen of the composite structure part (1).

3. The method according to claim 2,
**characterized in that**, as said or each locking tab (62) has a V-shaped cross-section, during the locking phase, said tab (62) is deformed by flattening the V.

4. The method according to one of claims 1 to 3,
**characterized in that**, as the connection means (41; 42) (51; 52) for assembling the composite structure (1) and metal interface (2) parts comprise at least two series of connection means, during the pre-assembling phase, the first series of assembling male/female connection means (41; 42) is assembled together and then the second series of assembling male/female connection means (51; 52) is assembled together.

5. The method according to claim 4,
**characterized in that**, the first series of assembling connection means (41; 42) being of the tab/aperture type and **in that** the second series of connection means (51; 52) being of the stud/aperture type, said apertures being preferably borne by the metal interface part (2), during the pre-assembling phase, the tab(s) (41) of the first series of connection means of the composite structure part is(are) introduced inside the corresponding aperture(s) (42) of the metal interface part (2) and then, by angular displacement of the parts (1, 2) one relative to the other around said connections, the parts (1, 2) are brought closer to each other until studs (51) of the second series of connection means of the composite structure part (1) are positioned inside the matching apertures (52) of the metal interface part (2) and **in that** during the locking phase, at least one portion of the locking means (61, 62) is deformed by pressing, for having said locking means pass from an inactive configuration to an active configuration, wherein any angular displacement of the parts (1, 2), in the direction for having the studs (51) emerge from the apertures (52), is limited or prevented.

6. A sub-assembly of the type comprising a composite structure part (1) and a metal interface part (2), said sub-assembly being intended, via its metal interface part (2), to be welded to a metal structure part (3) in order to form an assembly,
**characterized in that** the composite structure part (1) and the metal interface part (2) are, for maintaining them in the assembled condition, provided with so-called assembling male/female type mating connection means (41; 42) (51; 52) and with locking means (61; 62) pre-equipping said parts (1; 2), at least one portion of said locking means (61; 62) being deformable means capable of passing, under the effect of pressure and in the assembled condition of said parts (1; 2) by their assembling connection means (41; 42) (51; 52), from an inactive configuration to an active configuration, at least one portion of these locking means being formed, for the metal interface part (2), with so-called locking tab(s) (62) and for the composite structure part (1), with aperture(s) (61) or lumen(s), each aperture (61) or lumen being able to be positioned matching a tab (62), said or each tab (62) being a deformable tab capable, under the effect of pressing, of deforming in the direction for introducing the tab (62) into the matching aperture (61) or the lumen of the composite structure part (1) in the pre-assembled condition of said part (1, 2) by their assembling connection means (41; 42) (51; 52).

7. An assembly capable of being elaborated by applying a method according to one of claims 1 to 5, said assembly comprising at least one sub-assembly according to claim 6 and one metal structure part (3), the composite structure part (1) and the metal interface part (2) forming a sub-assembly welded via the metal interface part (2), to the metal structure part (3), the composite structure part (1) and the metal interface part (2) being, for maintaining them in the assembled condition, provided with assembling mating connection means (41; 42) (51; 52) of the so-called male/female type and with locking means (61; 62) pre-equipping said parts (1 ; 2), at least one portion (62) of said locking means (61; 62) pre-equipping the metal interface part (2) being deformable means, **characterized in that** locking means (61; 62) are mating connection means of the male/female type distinct from the assembling male/female mating connection means (41; 42) (51; 52) and **in that** at least one portion of the locking means (61, 62), capable of passing under the effect of pressure, from an inactive configuration to an active configuration, in the assembled condition of said parts (1; 2) by their assembling mating connection means (41; 42) (51; 52), is formed, for the metal interface part (2), with so-called locking tab(s) (62), and for the composite structure part (1), with aperture(s) (61) or lumen(s), each aperture (61) or lumen being able to be positioned matching a tab (62) in the pre-assembled condition of said parts (1, 2) by their assembling connection means (41; 42) (51; 52), said or each locking tab (62) being a deformable tab capable, under the effect of pressing, of deforming in the direction for introducing the tab (62) into the matching aperture (61) or lumen of the composite structure part (1), in the pre-assembled condition of said parts (1, 2) by their assembling connection means (41; 42) (51; 52).

8. The assembly according to claim 7,
**characterized in that** said or each locking tab (62) of the metal interface part (2) before deformation has a V-shaped cross section.

9. The assembly according to claim 7 or 8,
**characterized in that** the connection means (41; 42) (51; 52) for assembling the composite structure metal interface part (1; 2) are connection means comprising at least two series of connection means.

10. The assembly according to claim 9,
**characterized in that** the first series of assembling connection means (41; 42) is of the tab/aperture type and **in that** the second series (51; 52) of assembling connection means is of the stud/aperture type, said apertures being preferably borne every time by the metal interface part (2).

11. The assembly according to claim 9 or 10,
**characterized in that** the assembling connection means (41 ; 42) (51 ; 52) of each of the series and the locking means (61 ; 62) are each organized as a row of connecting or locking members, said rows being on a same part (1; 2) parallel with each other.

12. The assembly according to one of claims 7 to 11,
**characterized in that** the composite structure part (1) is a basin-shaped part capable of forming a spare wheel bin, **in that** the metal structure part (3) is a chassis of rolling stock and **in that** the metal interface part (2) appears as an elongated body able to be positioned along an edge of said basin.
